(19) Europäisches Patentamt
European Patent Office
Office européen des brevets

(11) **EP 2 741 030 A1**

(12) **EUROPEAN PATENT APPLICATION**
published in accordance with Art. 153(4) EPC

(43) Date of publication:
**11.06.2014 Bulletin 2014/24**

(51) Int Cl.:
*F25D 17/00* (2006.01)    *B01J 19/00* (2006.01)
*C10G 2/00* (2006.01)    *F22B 29/02* (2006.01)
*F22D 5/28* (2006.01)

(21) Application number: **12822546.3**

(22) Date of filing: **02.08.2012**

(86) International application number:
**PCT/JP2012/069692**

(87) International publication number:
**WO 2013/021908 (14.02.2013 Gazette 2013/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2011 JP 2011171812**

(71) Applicants:
• **Japan Oil, Gas and Metals National Corporation**
**Minato-ku, Tokyo 105-0001 (JP)**
• **INPEX Corporation**
**Tokyo 107-6332 (JP)**
• **JX Nippon Oil & Energy Corporation**
**Chiyoda-ku**
**Tokyo 100-8162 (JP)**
• **Japan Petroleum Exploration Co., Ltd.**
**Tokyo 100-0005 (JP)**

• **Cosmo Oil Co., Ltd.**
**Tokyo 105-8528 (JP)**
• **Nippon Steel & Sumikin Engineering Co., Ltd.**
**Tokyo 141-8604 (JP)**

(72) Inventors:
• **KATO, Yuzuru**
**Tokyo 141-8604 (JP)**
• **YAMADA, Eiichi**
**Tokyo 141-8604 (JP)**
• **MORITA, Kentarou**
**Tokyo 141-8604 (JP)**

(74) Representative: **Vossius & Partner**
**Siebertstrasse 4**
**81675 München (DE)**

(54) **TEMPERATURE CONTROL SYSTEM**

(57)    A temperature control system of the invention recovers reaction heat in a reactor in which an exothermal reaction occurs, to control the temperature in the reactor. The temperature control system includes: a refrigerant drum in which vapor and a liquid refrigerant are stored in a vapor-liquid equilibrium state; a heat removing section arranged in the reactor to evaporate a part of the liquid refrigerant supplied from the refrigerant drum by the reaction heat; a Return line that returns mixed phase fluid of vapor and the liquid refrigerant generated in the heat removing section to the refrigerant drum; a Vapor outlet line that supplies vapor in the refrigerant drum to outside of the system; and a Replenishing line that supplies makeup water in an amount matched with an amount of vapor discharged to the outside of the system, to the Return line.

FIG. 1

EP 2 741 030 A1

**Description**

TECHNICAL FIELD

The present invention relates to a temperature control system that can perform precise temperature control of a reactor by making the temperature in a refrigerant drum such as a steam drum uniform.

Priority is claimed on Japanese Patent Application No. 2011-171812, filed August 5, 2011, the content of which is incorporated herein by reference.

BACKGROUND ART

Conventionally, as a water supply system for a steam drum, there are those described for example in Patent Documents 1 and 2. The water supply system described in Patent Document 1 supplies water to a drum via a water supply line from an economizer upon reception of flue gas, and generates steam by vapor-liquid separation performed by a vapor-liquid separator for an evaporator. However, at the time of low load operation such as at startup, the temperature at the feed water outlet of the economizer increases and becomes higher than the saturation temperature with respect to drum pressure. In the case in which such air water is to be directly supplied to the drum, because the pressure thereof is higher than the internal pressure of the drum, a vapor-liquid separator for vapor-liquid separation is provided to perform vapor-liquid separation in order to prevent steaming in the drum.

Moreover, in the water supply system described in Patent Document 2, an internal feed line is provided in the drum instead of a vapor-liquid separator, and a small hole is formed in an upper half thereof and a through hole having a larger diameter than that is formed in a lower half thereof so that vapor and feed water flow out.

However, the above-described configuration is for a general boiler, and if the temperature of the makeup water is lower than that of the vapor phase in the steam drum, a temperature difference occurs between the vapor phase and the liquid phase. If the feed-water temperature of the makeup water to the steam drum is low, the temperature of the liquid phase becomes lower than the saturation temperature. Hence, if this configuration is applied to temperature control of an FT (Fisher-Tropsch) reactor, control becomes unstable. Moreover, there is another problem in that the amount of generated vapor becomes unstable because the temperature of the liquid phase decreases due to the amount of water supplied to the steam drum.

Recently, as one of the FT synthesis reaction (Fisher-Tropsch synthesis reaction) methods used in the FT reactor, a GTL (Gas To Liquids: liquid fuel synthesis) technique has been developed in which natural gas is reformed to generate synthesis gas containing carbon monoxide gas (CO) and hydrogen gas ($H_2$) as the main components, this synthesis gas is used for the FT synthesis reaction (Fisher-Tropsch synthesis reaction) as a raw material gas to synthesize liquid hydrocarbon, and the liquid hydrocarbon is hydrogenized and refined, thereby producing liquid fuel products such as naphtha (crude gasoline), kerosene, light oil, and wax.

In such an FT synthesis reaction, a reactor converts synthesis gas containing rich hydrogen gas and carbon monoxide gas to hydrocarbon by using a catalyst. The FT synthesis reaction is an exothermal reaction, and the temperature range for an appropriate reaction is very narrow. Accordingly, the reaction temperature in the reactor needs to be controlled precisely, while recovering the generated reaction heat.

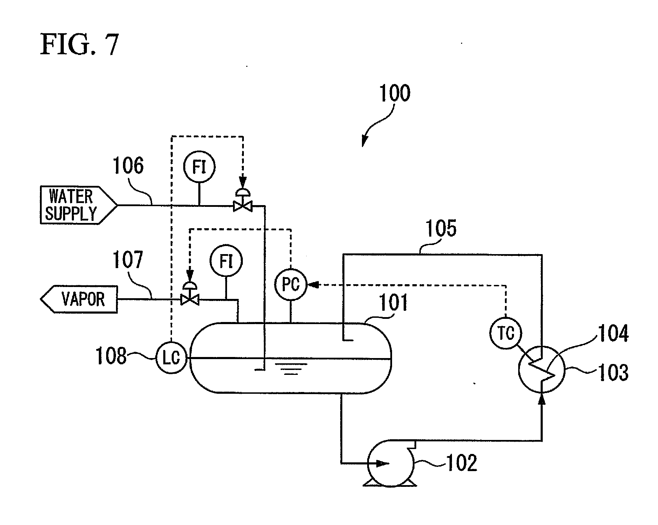

As a temperature control system using the above-described FT reactor, for example, the one shown in FIG. 7 is known. This temperature control system 100 supplies water accumulated in a steam drum 101 in a vapor-liquid equilibrium state by a pump 102 from the bottom to a heat removing tube 104 in a reactor 103 in which a Fisher-Tropsch synthesis reaction (exothermal reaction) is performed. Water in the heat removing tube 104 is partly evaporated and heat-recovered by reaction heat generated in the reactor 103 accompanying the exothermal reaction, and this vapor-water two-phase fluid passes through a Return line 105 to the steam drum 101 and is returned to the steam drum 101. The vapor then passes through a Vapor outlet line 107 and is supplied to a vapor user outside of the system.

Meanwhile, makeup water in an amount matched with the vapor supplied to the outside of the system is replenished to the steam drum 101 through a Replenishing line 106. Supply of makeup water is adjusted so that the liquid level becomes constant based on a measurement result obtained by a level measuring section 108 that measures the water level in the steam drum 101.

[Prior Art Documents]

[Patent Documents]

[Patent Document 1] Japanese Examined Patent Application, Second Publication No. H3-53521

[Patent Document 2] Japanese Unexamined Patent Application, First Publication No. H6-257703

**DISCLOSURE OF INVENTION**

[Problems to be Solved by the Invention]

However, in the temperature control system 100 described above, because an opening of the Replenishing line 106 is submerged under the water surface in the steam drum 101, makeup water having a large specific gravity and comparatively low temperature directly flows to the bottom of the steam drum 101, and a temperature difference occurs between the vapor phase and the water phase in the steam drum 101. Then, the correlation between the vapor phase pressure in the steam drum 101 and the temperature of the water phase collapses, and hence control by the temperature control system 100 may not be performed with high accuracy.

In view of the above situation, it is an object of the present invention to provide a temperature control system that can control the temperature with high accuracy, by maintaining the vapor-liquid temperature in the steam drum at saturation temperature.

[Means for Solving the Problems]

A temperature control system according to the present invention recovers reaction heat in a reactor in which an exothermal reaction occurs, to control the temperature in the reactor. The temperature control system comprises: a refrigerant drum in which vapor and a liquid refrigerant are stored in a vapor-liquid equilibrium state; a heat removing section arranged in the reactor to evaporate a part of the liquid refrigerant supplied from the refrigerant drum by the reaction heat; a Return line that returns mixed phase fluid of vapor and the liquid refrigerant generated in the heat removing section to the refrigerant drum; a Vapor outlet line that supplies vapor in the refrigerant drum to outside of the system; and a Replenishing line that supplies makeup water in an amount matched with an amount of vapor discharged to the outside of the system, to the Return line.

Moreover, the temperature control system may include: a control unit that determines the amount of makeup water by dividing the reaction heat in the reactor by the heat capacity per unit quantity of refrigerant determined based on a difference between a comparatively high temperature in the refrigerant drum and a comparatively low temperature of makeup water, and physical values (specific heat, evaporative latent heat) of the refrigerant; and a makeup water adjusting device that sets the amount of makeup water to be supplied from the Replenishing line to the Return line according to the amount of makeup water determined by the control unit.

Moreover, it is preferred that the amount of makeup water determined by the control unit be calculated according to the following equation:

$$WL3 = Q/\{Cp \times (t1 - t3) + r\}$$

where WL3: amount of makeup water
Q: reaction heat in reactor
Cp: specific heat of liquid refrigerant
t1: temperature in refrigerant drum and heat removing section of reactor
t3: temperature of makeup water
r: evaporative latent heat of liquid refrigerant.

Moreover, the Replenishing line may be connected to the Return line at an acute angle along a traveling direction of mixed phase fluid in the Return line at a junction of the Return line and the Replenishing line.

Furthermore, the Replenishing line may be provided with a seal portion that prevents back flow of vapor.

Alternatively, a spray nozzle that sprays makeup water into the Return line may be provided in the Replenishing line at the junction of the Return line and the Replenishing line.

[Effects of the Invention]

The temperature control system according to the present invention is provided with the Replenishing line that supplies makeup water in an amount matched with an amount of vapor discharged to the outside of the system, to the Return line that returns mixed phase fluid of vapor and the liquid refrigerant generated in the heat removing section in the reactor, to the refrigerant drum. Accordingly, makeup water in an amount matched with the amount of vapor discharged to the outside of the system, is merged into the Return line and directly mixed with vapor in the Return line at saturation temperature, thereby enabling to heat the makeup water to saturation temperature before being supplied to the refrigerant drum. As a result, the gas-liquid temperature in the refrigerant drum can be maintained at saturation temperature at all times.

Moreover, as compared with the conventional temperature control system in which the makeup water is directly supplied to the refrigerant drum, the complexity of the structure and enlargement of the equipment can be avoided, and the temperature in the refrigerant drum can be made uniform.

As a result, since the temperature in the refrigerant drum can be made uniform efficiently, temperature control of the reactor can be performed with high accuracy and precision.

Moreover, the temperature control system includes: the control unit that determines the amount of makeup water by dividing the reaction heat in the reactor by heat capacity per unit quantity of refrigerant determined based on the difference between a comparatively high temperature in the refrigerant drum and a comparatively low temperature of makeup water, and physical values (specific heat, evaporative latent heat) of the refrigerant; and the makeup water adjusting device that sets the amount of makeup water to be supplied from the Replenishing line to the Return line according to the amount of makeup water determined by the control unit. Consequently, the control unit can accurately calculate the amount of makeup water so as to be equal to a flow rate of vapor supplied to the outside of the system, and can accurately limit the amount of makeup water so as not to exceed the flow rate of vapor. As a result, hammering due to complete condensation at the junction can be reliably prevented.

Because the amount of makeup water determined by the control unit is specifically calculated according to the following equation, the amount of makeup water can be accurately calculated so as to be equal to the flow rate of vapor supplied to the outside of the system, and can be limited so as not to exceed the flow rate of vapor.

$$WL3 = Q/\{Cp \times (t1 - t3) + r\}$$

where $WL3$: amount of makeup water

$Q$: reaction heat in reactor

$Cp$: specific heat of liquid refrigerant

$t1$: temperature in refrigerant drum and heat removing section of reactor

$t3$: temperature of makeup water

$r$: evaporative latent heat of liquid refrigerant.

Moreover, in the temperature control system according to the present invention, the Replenishing line is connected to the Return line at an acute angle along the traveling direction of mixed phase fluid at the junction of the Return line and the Replenishing line. Consequently, makeup water in the Replenishing line can be supplied along a flow direction of the mixed phase fluid at the time of merging makeup water to the mixed phase fluid of vapor into the liquid refrigerant in the Return line. As a result, generation of hammering due to an impact when makeup water collides with the mixed phase fluid at the time of joining can be prevented.

Moreover, the seal portion for preventing back flow of vapor is provided in the Replenishing line. Consequently, when the supply amount of makeup water is small, a situation where vapor in the Return line flows back into the Replenishing line and condenses causing hammering, can be prevented.

Furthermore, the spray nozzle that sprays makeup water into the Return line is provided in the Replenishing line, at the junction of the Return line and the Replenishing line. Consequently, when makeup water is supplied from the Replenishing line to the Return line at the junction, if makeup water is sprayed by the spray nozzle and dispersed uniformly to be brought into contact with vapor in the mixed phase fluid, rapid vapor condensation due to an imbalance of makeup water can be suppressed, and the occurrence of hammering can be prevented.

BRIEF DESCRIPTION OF THE DRAWINGS

FIG. 1 is a schematic configuration diagram of a temperature control system according to a first embodiment of the present invention,

FIG. 2 is an explanatory diagram showing circulation paths of water and vapor, flow rates thereof, and temperatures thereof, in the temperature control system according to the embodiment.

FIG. 3 is an explanatory diagram showing a junction of a Return line and a Replenishing line in a reactor according to a first modified example.

FIG. 4 is an explanatory diagram showing the junction of the Return line and the Replenishing line in the reactor according to a second modified example.

FIG. 5 is an explanatory diagram showing the junction of the Return line and the Replenishing line in the reactor according to a third modified example.

FIG. 6 is a graph showing a change in a vapor percentage at the Return line after being joined to the outlet of the reactor in an example.

FIG. 7 is a schematic configuration diagram of a conventional temperature control system.

BEST MODE FOR CARRYING OUT THE INVENTION

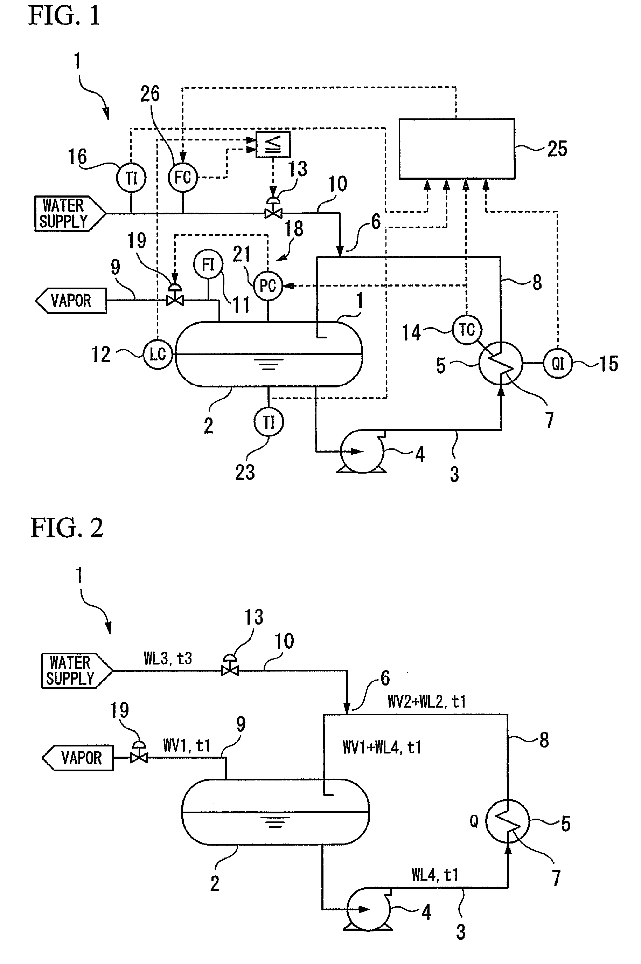

In a temperature control system 1 shown in FIG. 1, for example, water is accumulated at a saturation temperature as a liquid refrigerant in a gas-liquid equilibrium state in a steam drum 2, which is a refrigerant drum, and vapor is filled in a saturated state on an upper side of a liquid level in the steam drum 2. A supply line 3 is connected to the bottom of the steam drum 2, and water is fed to a Heat removing line 7 (heat removing section) in an FT reactor 5 (hereinafter, referred to as "reactor") in which a Fischer-Tropsch synthesis reaction (exothermal reaction) is performed, by a water supply pump 4 via the supply line 3. Water is partially evaporated in the Heat removing line 7 due to reaction heat accompanying the exothermal reaction generated by the reactor 5, and the reaction heat is recovered.

Furthermore, two-phase fluid (mixed phase fluid) containing vapor generated by evaporation of a part of the water in the Heat removing line 7, and water, is returned to the steam drum 2 via the Return line 8 for the steam drum 2, and a discharge opening of the Return line 8 is opened in an area of vapor on the upper side of the liquid level in the steam drum 2. Then vapor is supplied to a vapor user (not shown) outside of the system via a Vapor outlet line 9. A vapor discharge amount measuring unit 11 that measures the discharge amount of vapor to the outside of the system is provided in the Vapor outlet line 9.

Moreover, there is arranged a Replenishing line 10 for replenishing the steam drum 2 with a liquid refrigerant, for example, makeup water, in an amount matched with the discharge amount of vapor supplied to the outside of the system. The Replenishing line 10 is connected at a junction 6 in the middle of the Return line 8. Consequently, makeup water having a comparatively low temperature (for example, a temperature t3) is directly mixed with vapor having a comparatively high temperature (for example, a temperature t1; t1>t3) evaporated in the reactor 5, in the Return line 8 and heated to reach saturation temperature. A replenishing temperature measuring section 16 that measures the temperature of the makeup water is provided in the Replenishing line 10.

The makeup water in the Replenishing line 10 reaches saturation temperature in the Return line 8, and is supplied to the steam drum 2.

A reaction heat temperature measuring section 14 that measures the temperature in the reactor 5, and a reaction heat calculating section 15 that calculates the amount of reaction heat Q, are provided in the reactor 5 in which the exothermal reaction is performed. Moreover, a pressure control section 18 that controls the pressure in the steam drum 2 based on a measurement result of the reaction heat temperature measuring section 14 that measures the temperature in the reactor 5 in which the exothermal reaction is performed, is provided to adjust the amount of vapor discharged from the Vapor outlet line 9 to the outside of the system by cascade control, thereby controlling the temperature in the reactor 5 in which the exothermal reaction is performed. The reaction heat temperature measuring section 14 may include, for example, a plurality of temperature sensors arranged away from each other in a vertical direction in the reactor 5, so that a mean value of the respective temperatures measured by these temperature sensors can be designated as the temperature in the reactor 5.

A vapor phase (gas phase) and a water phase (liquid phase) in the steam drum 2 are in the vapor-liquid equilibrium state. Therefore the vapor phase pressure and the temperature of the water phase in the steam drum 2 are in a certain correlation. Consequently, when a deviation occurs in the actual temperature in the reactor 5 measured by the reaction heat temperature measuring section 14 with respect to a temperature set value of the reactor 5 in which the exothermal reaction is performed, the pressure control section 18 is operated to change the vapor phase pressure in the steam drum 2.

Here, the pressure control section 18 includes; the Vapor outlet line 9, a pressure adjusting valve 19 provided in the Vapor outlet line 9, and a pressure setting section 21 that controls the pressure adjusting valve 19 to set the pressure in the steam drum 2 via the Vapor outlet line 9. The temperature measurement result of the reaction heat temperature measuring section 14 is input to the pressure setting section 21. The pressure setting section 21 calculates a deviation of the actual temperature in the reactor 5 with respect to the temperature set value based on the temperature measurement result, and controls the pressure adjusting valve 19 based on the deviation to change the vapor phase pressure in the steam drum 2.

By changing the vapor phase pressure in the steam drum 2 in this manner, the temperature of the water phase in the steam drum 2 (that is, the temperature of the water supplied to the Heat removing line 7 in the reactor 5 in which the exothermal reaction is performed) is changed, thereby enabling to change the amount of heat recovered by the Heat removing line 7, and the temperature in the reactor 5 in which the exothermal reaction is performed can be made to approach the temperature set value.

In the present embodiment, the temperature of the water phase in the steam drum 2 can be measured by a water-phase temperature measuring section 23 provided at the bottom of the steam drum 2. In the present embodiment, the steam drum 2, the supply line 3, the Heat removing line 7, and the Return line 8 constitute a system in which water as a liquid refrigerant circulates. Moreover, because makeup water is supplied to the Return line 8, the temperature in the steam drum 2 is at saturation temperature at all times under any pressure, thereby enabling to control the temperature in the reactor precisely and highly accurately.

Moreover, the temperature control system 1 includes a control unit 25 that controls the amount of makeup water so that the amount of makeup water from the Replenishing line 10 does not exceed the amount of vapor discharged from the Vapor outlet line 9 to the outside of the system. The control unit 25 receives respective measurement values obtained by; the water-phase temperature measuring section 23 that measures the water phase temperature in the steam drum 2, the reaction heat calculating section 15, and the replenishing temperature measuring section 16 that measures the temperature of the makeup water in the Replenishing line 10, and calculates and determines the amount of makeup water so that it does not exceed the amount of vapor discharged from the Vapor outlet line 9.

Data of the calculated amount of makeup water is output to a flow rate adjusting device 26 provided in the Replenishing line 10. The flow rate adjusting device 26 adjusts an aperture of a flow rate adjusting valve 13 to control the amount of makeup water. A level measuring section 12 that measures the water level (liquid level) in the steam drum 2, is provided in the steam drum 2. When the valve aperture of the flow rate adjusting valve 13 output based on a measurement result of the level measuring section 12 is smaller than a valve aperture corresponding to the calculated amount of makeup water, that aperture is selected in order to prevent excessive water supply to the steam drum 2 (prevent overflow).

Accordingly, the amount of makeup water is controlled so as not to exceed the flow rate of vapor.

Next is a description of an example of a calculation method of an amount of makeup water by the control unit 25.

As shown in FIG. 2, it is assumed that the vapor amount discharged by the Vapor outlet line 9 is WV1, the temperature thereof is t1, the flow rate of water supplied via the supply line 3 to the reactor 5 is WL4, the temperature thereof is t1, the amount of vapor discharged from the reactor 5 to the Return line 8 is WV2, the flow rate of water is WL2, each temperature is t1, the flow rate of water supplied from the Replenishing line 10 to the Return line 8 is WL3, the temperature thereof is t3, the amount of vapor returned from the Return line 8 after being merged into the steam drum 2 is WV1, the flow rate of water is WL4, and each temperature is t1. It is further assumed that the flow rate of water is in units of kg/h, the flow rate of vapor is in units of kg/h, and the temperature is °C.

Moreover, it is assumed that the amount of reaction heat in the reactor 5 is Q (kcal/h), the evaporative latent heat of water is r (kcal/kg), and the specific heat of water is Cp (kcal/kg/°C).

According to the material balance, the vapor generation amount WV1 discharged by the Vapor outlet line 9 and the amount of makeup water WL3 are equal, and hence, the following equation (1) is established.

$$ WV1 = WL3 \qquad (1) $$

A procedure for deriving the above equation (1) is explained below.

In FIG. 2, at first the flow rate WL4 of water at temperature t1 supplied from the steam drum 2 becomes the flow rate of vapor WV2 + the flow rate of water WL2 at temperature t1, by recovering the reaction heat in the reactor 5. Accordingly, the material balance of input and output involving a change of phase in the reactor 5 is expressed by the following equation (2).

$$ WL4 = WV2 + WL2 \qquad (2) $$

Moreover, by supplying the amount of makeup water WL3 from the Replenishing line 10, the material balance (water supply + change of phase) at the junction 6 of the Return line 8 and the Replenishing line 10 becomes as shown in the following equation (3).

$$ WV2 + WL2 + WL3 = WV1 + WL4 \qquad (3) $$

By substituting equation (2) into equation (3) and rearranging, the following equation is obtained.

$$ WV1 = WL3 \qquad (1) $$

Furthermore, the temperature of the amount of makeup water WL3 is the low temperature t3, and other temperatures are at the high temperature t1 (>t3). At the junction of the Return line 8 and the Replenishing line 10, the amount of vapor condensation = water supply preheat amount /evaporative latent heat. Hence,

$$(WV2 - WV1) \times r = WL3 \times Cp \times (t1 - t3) \qquad (4).$$

The relation between the amount of reaction heat Q and the vapor generation amount WV2 in the reactor 5 is as described below.

$$WV2 = Q/r \qquad (5)$$

By substituting equations (1) and (5) into equation (4) and rearranging,

$$WL3 = Q/\{Cp \times (t1 - t3) + r\} \qquad (6)$$

Thus, the amount of makeup water WL3 can be obtained based on the relation between the amount of reaction heat Q and the water supply temperatures t1 and t3.

The amount of reaction heat Q can be obtained from a product of; the reaction amount in the reactor 5 measured and calculated separately or a temperature difference between the steam drum 2 and the reactor 5, the heat transfer area of the Heat removing line, and the overall heat transfer coefficient.

The temperature control system 1 according to the present embodiment has the above-described configuration. Next is a description of a control method thereof.

For example, by driving the water supply pump 4, water at temperature t1 is supplied at the flow rate WL4 from the steam drum 2 to the reactor 5. A part of the water flow rate WL4 is evaporated in the Heat removing line 7 due to reaction heat accompanying the exothermal reaction generated in the reactor 5 to become two-phase fluid having the vapor flow rate WV2 and the water flow rate WL2 at temperature t1. The two-phase fluid (mixed phase fluid) is fed by the Return line 8.

In the vapor phase and the water phase in the steam drum 2, because the water level decreases by discharging water at the flow rate WL4 toward the reactor 5 by the water supply pump 4, the amount of makeup water WL3 determined by the control unit 25 is adjusted and supplied by the flow rate adjusting valve 13.

Meanwhile, in the Replenishing line 10, the amount of makeup water WL3 at the comparatively low temperature t3 determined by the control unit 25, is replenished and merged into the two-phase fluid (WV2 + WL2) in the Return line 8 at the junction 6 with the Return line 8. At the junction 6, the amount of makeup water WL3 at temperature t3 is directly mixed with the vapor WV2 at the high temperature t1 in the Return line 8 and heated up to saturation temperature t1. Further, a part of the vapor is condensed at the junction 6, and the flow rate of water in the Return line 8 becomes the same as the flow rate WL4 of water supplied from the steam drum 2 to the supply line 3.

In the Return line 8 downstream of the junction 6, the flow rate becomes the flow rate WV1 of vapor and the flow rate WL4 of water at temperature t1, and the two-phase fluid is discharged to above the water surface in the steam drum 2.

Here is a description of a control method for the amount of makeup water WL3 performed by the control unit 25. The temperature t1 measured by the water-phase temperature measuring section 23 that measures the water phase temperature in the steam drum 2, the amount of reaction heat Q calculated by the reaction heat calculating section 15, and the temperature t3 of the makeup water measured by the replenishing temperature measuring section 16 in the Replenishing line 10 are input to the control unit 25. The control unit 25 then calculates the amount of makeup water WL3 according to the above equation (6).

The calculation value for this amount of makeup water WL3 is output to the flow rate adjusting device 26 to operate the flow rate adjusting valve 13 and supply makeup water in the amount of WL3 to the Replenishing line 10 to merge into the Return line 8 at the junction 6, and be discharged to the steam drum 2.

Then in the steam drum 2, the correlation based on the vapor-liquid equilibrium state between the vapor phase pressure and the temperature of the water phase is always maintained.

Moreover, vapor is supplied at the flow rate WV1 from the steam drum 2 to the outside of the system by the Vapor outlet line 9, and makeup water in the amount of WL3 merges into to the vapor-water two-phase fluid at the junction 6 with the Return line 8 and is supplied to the steam drum 2. Because the amount of makeup water WL3 is controlled by the control unit 25 to be equal to the flow rate of vapor WV1, the water level in the steam drum 2 is maintained constant.

As described above, according to the temperature control system 1 of the present embodiment, the amount of makeup water WL3 equal to the flow rate of vapor WV1 to be supplied to the outside of the system by the Vapor outlet line 9 and at the comparatively low temperature t3, can be joined to the Return line 8 from the Replenishing line 10, and can be directly mixed with vapor at the flow rate WV2 at saturation temperature t1 in the Return line 8. Therefore the makeup water can be heated instantaneously to saturation temperature.

Consequently, the vapor-liquid temperature in the steam drum 2 can be always maintained at saturation temperature. As a result, the reactor temperature can be controlled precisely and highly accurately.

Furthermore, the control unit 25 can calculate so that the amount of makeup water WL3 becomes equal to the flow rate of vapor WV1 to be supplied to the outside of the system, and can accurately limit the amount of makeup water so that the amount of makeup water WL3 does not exceed the flow rate of vapor WV1, thereby enabling to prevent hammering due to complete condensation at the junction 6.

In the conventional temperature control system, the configuration is such that makeup water is directly supplied to the steam drum 2. Therefore, heating of the makeup water is performed by heat transfer (condensation of vapor) in the steam drum 2. In order to increase the temperature of the makeup water up to saturation temperature, the amount of makeup water in the Replenishing line 10 needs to be divided into as small an amount of supply water as possible, or a sufficient residence time needs to be ensured in the steam drum 2, thereby making the structure complicated and the equipment large, which leads to a cost increase. In this regard, with the present invention, the complexity of the structure and enlargement of the equipment can be avoided, and the temperature in the steam drum 2 can be made uniform.

The present invention is not limited to the embodiment described above, and various changes can be made without departing from the scope of the invention.

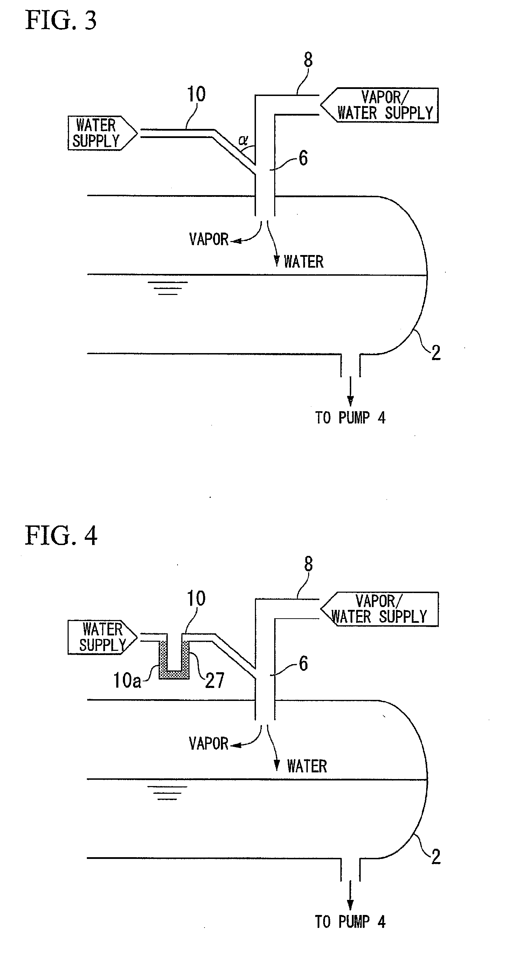

Next is a description of a configuration for preventing hammering when the Replenishing line 10 flow joins to the Return line 8 flow at the junction 6, as a modified example with reference to FIG. 3 through FIG. 5.

FIG. 3 shows a configuration of the junction 6 according to a first modified example. In FIG. 3, the Replenishing line 10 is connected and merged at an acute angle $\alpha$ with respect to the flow direction of the two-phase fluid in the Return line 8. Consequently, makeup water smoothly joins to the vapor-water two-phase fluid flowing in the Return line 8, and hence, hammering does not occur due to an impact when the makeup water collides with the mixed phase fluid at the time of joining or rapid condensation of the mixed phase fluid.

At the junction according to a second modified example shown in FIG. 4, the Replenishing line 10 is connected and joined at an acute angle with respect to the flow direction of the two-phase fluid in the Return line 8. Further, for example, a substantially U-shaped depression 10a is formed in the Replenishing line 10 on an upstream side of the junction 6, and a water seal portion 27 in which water is residually filled in the depression 10a, is provided in the Replenishing line 10 as a seal portion.

According to this configuration, when the amount of makeup water WL3 is small, even if vapor in the Return line 8 tries to flow back into the Replenishing line 10, the vapor is stopped by the water seal portion 27. Consequently, a situation where vapor in the Return line 8 flows back into the Replenishing line 10 and hammering occurs due to condensation can be prevented.

As the seal portion for preventing back flow of the vapor, a check valve can be provided instead of the water seal portion 27.

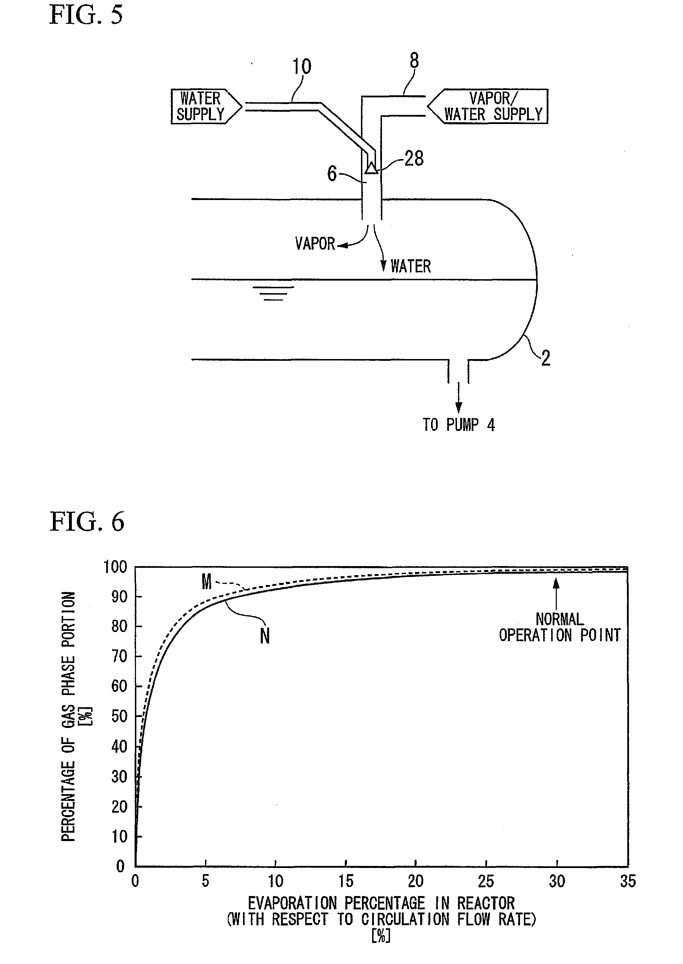

FIG. 5 shows a configuration of the junction 6 according to a third modified example. In FIG. 5, the Replenishing line 10 is connected at an acute angle with respect to the flow direction of the two-phase fluid in the Return line 8, and a spray nozzle 28 that disperses and sprays makeup water in the Return line 8, is formed at the end of the Replenishing line 10. As a result, makeup water that joins the vapor and water in the Return line 8 is widely sprayed by the spray nozzle 28, and hence, rapid vapor condensation is suppressed to prevent hammering.

In the temperature control system 1 according to the present embodiment, any two or three configurations of the first to the third modified examples can be combined.

[Example]

Next is a description of an example of the temperature control system 1 according to an embodiment of the present invention.

First, in FIG. 2, it is assumed that the temperature inside the steam drum 2, the respective water temperatures t1 of the water to be supplied at the flow rates WL4 and WL2 via the supply line 3, and the temperature t1 of vapor at the flow rates WV1 and WV2 are all a saturation temperature of 195°C. It is also assumed that the water temperature t3 of the makeup water in the amount of WL3 is 110°C.

Moreover, it is assumed that

$$\text{reaction heat } Q = 8000000 \text{ kcal/h}$$

evaporative latent heat of water r = 470 kcal/kg (physical property (constant)) specific heat Cp of water = 1 kcal/kg/°C (physical property (constant)) pressure in steam drum = 1.3 MPaG
circulation amount WL4 of water supply pump 4 = 68000 kg/h.

Under the above conditions, the control unit 25 of the temperature control system 1 determines the amount of makeup water WL3 which becomes equal to the flow rate of vapor WV1 to the outside of the system, according to the above equation (6), so as to make the temperature in the steam drum 2 uniform and keep the liquid level constant. That is to say, substituting for the respective numerals in equation (6) gives,

$$WL3 = Q/\{Cp \times (t1 - t3) + r\}$$

$$= 8000000/\{1 \times (195 - 110) + 470\}$$

$$= 14400 \text{ kg/h.}$$

Furthermore according to equation (1), the flow rate of vapor WV1 is equal to the amount of makeup water WL3, and hence

$$WV = WL3 = 14400 \text{ kg/h.}$$

Moreover, obtaining the vapor generation amount WV2 in the reactor 5 according to equation (5) gives

$$WV2 = Q/r$$

$$= 8000000/470$$

$$= 17000 \text{ kg/h.}$$

Furthermore, obtaining the flow rate of water WL2 at the outlet of the reactor 5 according to equation (2) gives

$$WL2 = WL4 - WV2$$

$$= 68000 - 17000$$

$$= 51000 \text{ kg/h.}$$

Next, FIG. 6 is a graph for an example showing a change in vapor percentage at positions before and after the junction 6 between the Return line 8 and the Replenishing line 10, in the temperature control system 1.

In FIG. 6, the horizontal axis denotes the percentage of vapor WV2 generated in the reactor 5 with respect to the water circulation amount WL4 to be supplied from the steam drum 2 to the reactor 5 (WV2/WL4), and the vertical axis denotes the percentage of vapor content in the two-phase fluid in the Return line 8 at positions before and after the junction 6 as a percentage of the gas phase portion.

When the percentage of vapor WV2 generated in the reactor 5 with respect to the water circulation amount WL4 (WV2/WL4) is changed, the percentage of vapor content (gas phase portion) in the two-phase fluid is calculated for before and after the junction 6 in the Return line 8.

In FIG. 6, the broken line M denotes a change in the percentage of gas phase (vapor) at the outlet (Return line 8) of the reactor 5 (WV2/(WL2 + WV2)), and the solid line N denotes a change in the percentage of gas phase (vapor) in the Return line 8 after where the Replenishing line 10 is joined thereto (WV1/(WV1 + WL4).

In the graph shown in FIG. 6, the evaporation percentage in the reactor 5 is 0 at the start point (WV2/WL4 = 0). However, the generation amount of vapor WV2 increases with temperature rise in the reactor 5. Normally, an operation is performed at a percentage of the evaporation amount WV2 to the circulation flow rate WL4 in the reactor 5 (WV2/WL4) of 30%. This is designated as the normal operation point. In this state, if the flow rate of vapor WV1 and the amount of makeup water WL3 are well balanced, a change from the percentage of the amount of vapor WV2 generated at the outlet of the reactor 5 (WV2/WL4) to the percentage of the amount of vapor WV1 in the Return line 8 after joining the makeup water WL3 (WV1/(WV1 + WL4)) is only a decrease by about 1%.

Moreover, over the entire range in which the ratio of the evaporation amount WV2 to the circulation flow rate WL4 in the reactor 5 (WV2/WL4) exceeds 0 and is up to 35%, even if the ratio of the vapor amount shown by the broken line M (WV2/(WL2 + WV2)) changes to the percentage of the vapor amount shown by the solid line N in the Return line 8 after joining (WV1/(WV1 + WL4)), if the flow rate of vapor WV1 and the amount of makeup water WL3 are well balanced, the change is as low as in a range of about 1% to 3%, and hence, hammering does not occur.

If complete condensation of the vapor WV2 in the Return line 8 occurs at the junction 6 between the Return line 8 and the Replenishing line 10, hammering may occur. However, in the embodiment of the present invention, if the flow rate of vapor WV1 and the amount of makeup water WL3 are well balanced, the change in the percentage of the vapor WV1 in the Return line 8 after joining the amount of makeup water WL3 is in the range of about 1% to 3%, and hammering does not occur.

In the embodiment described above, the FT reactor in which the Fischer-Tropsch synthesis reaction is performed inside the reactor 5 is used. However, if an exothermal reaction is performed in the reactor 5, the reaction need not be the Fischer-Tropsch synthesis reaction.

In the present embodiment, the respective modified examples, and the examples, water is adopted as the liquid refrigerant. However, the liquid refrigerant need not be water.

INDUSTRIAL APPLICABILITY

The present invention relates to a temperature control system that can perform precise temperature control in a reactor by making the temperature in a refrigerant drum such as a steam drum uniform.

According to the present invention, the temperature can be controlled highly accurately by maintaining the vapor-liquid temperature in the steam drum at saturation temperature.

[Description of the Reference Symbols]

| | |
|---|---|
| 1 | Temperature control system |
| 2 | Steam drum |
| 3 | Supply line |
| 4 | Pump |
| 5 | Reactor |
| 6 | Junction |
| 7 | Heat removing line |
| 8 | Return line |
| 9 | Vapor outlet line |
| 10 | Replenishing line |
| 11 | Vapor discharge amount measuring unit |
| 12 | Level measuring section |
| 13 | Flow rate adjusting valve |
| 14 | Reaction heat temperature measuring section |
| 15 | Reaction heat calculating section |
| 16 | Replenishing temperature measuring section |
| 23 | Water-phase temperature measuring section |
| 25 | Control unit |
| 26 | Flow rate adjusting device |

**Claims**

1. A temperature control system that recovers reaction heat in a reactor in which an exothermal reaction occurs, to control the temperature in the reactor, comprising:

   a refrigerant drum in which vapor and a liquid refrigerant are stored in a vapor-liquid equilibrium state;
   a heat removing section arranged in the reactor to evaporate a part of said liquid refrigerant supplied from said refrigerant drum by said reaction heat;
   a Return line that returns mixed phase fluid of vapor and the liquid refrigerant generated in the heat removing section to said refrigerant drum;
   a Vapor outlet line that supplies vapor in said refrigerant drum to outside of the system; and
   a Replenishing line that supplies makeup water in an amount matched with an amount of vapor discharged to the outside of the system, to said Return line.

2. A temperature control system according to claim 1, further comprising:

   a control unit that determines said amount of makeup water by dividing the reaction heat in said reactor by a unit refrigerant heat amount determined based on a comparatively high temperature in said refrigerant drum, a comparatively low temperature of makeup water, and physical values (specific heat, evaporative latent heat) of the refrigerant; and
   a makeup water adjusting device that sets the amount of makeup water to be supplied from said Replenishing line to the Return line according to said amount of makeup water determined by said control unit.

3. A temperature control system according to claim 2, wherein the amount of makeup water determined by said control unit is calculated according to the following equation:

$$WL3 = Q/\{Cp \times (t1 - t3) + r\}$$

   where WL3: amount of makeup water
   Q: reaction heat in reactor
   Cp: specific heat of liquid refrigerant
   t1: temperature in refrigerant drum and heat removing section of reactor
   t3: temperature of makeup water
   r: evaporative latent heat of liquid refrigerant.

4. A temperature control system according to any one of claim 1 through claim 3, wherein said Replenishing line is connected to said Return line at an acute angle along a traveling direction of mixed phase fluid in said Return line at a junction of said Return line and said Replenishing line.

5. A temperature control system according to any one of claim 1 through claim 4, wherein said Replenishing line is provided with a seal portion that prevents back flow of vapor.

6. A temperature control system according to any one of claim 1 through claim 5, wherein a spray nozzle that sprays makeup water into said Return line is provided in said Replenishing line at the junction of said Return line and said Replenishing line.

FIG. 1

FIG. 2

FIG. 3

FIG. 4

## FIG. 5

## FIG. 6

# FIG. 7

| | **INTERNATIONAL SEARCH REPORT** | International application No. |
|---|---|---|
| | | PCT/JP2012/069692 |

A.  CLASSIFICATION OF SUBJECT MATTER
*F25D17/00*(2006.01)i, *B01J19/00*(2006.01)i, *C10G2/00*(2006.01)i, *F22B29/02*
(2006.01)i, *F22D5/28*(2006.01)i

According to International Patent Classification (IPC) or to both national classification and IPC

B.  FIELDS SEARCHED

Minimum documentation searched (classification system followed by classification symbols)
F25D17/00, B01J19/00, C10G2/00, F22B29/02, F22D5/28

Documentation searched other than minimum documentation to the extent that such documents are included in the fields searched
Jitsuyo Shinan Koho       1922–1996   Jitsuyo Shinan Toroku Koho   1996–2012
Kokai Jitsuyo Shinan Koho  1971–2012   Toroku Jitsuyo Shinan Koho   1994–2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2008-155178 A  (Sumitomo Chemical Co., Ltd.),<br>10 July 2008 (10.07.2008),<br>paragraphs [0016] to [0032], [0065] to [0083];<br>fig. 1 to 3<br>& CN 101274263 A | 1-3,5<br>4,6 |
| A | JP 54-115303 A  (Didier Engineering GmbH),<br>07 September 1979 (07.09.1979),<br>entire text; all drawings<br>& DE 2807422 A1       & AU 4182478 A<br>& AU 523770 B | 1-6 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 August, 2012 (30.08.12) | Date of mailing of the international search report<br>11 September, 2012 (11.09.12) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 741 030 A1**

## INTERNATIONAL SEARCH REPORT

| | International application No. |
|---|---|
| | PCT/JP2012/069692 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 55-24190 A  (Thyssengas GmbH),<br>21 February 1980 (21.02.1980),<br>entire text; all drawings<br>& US 4258006 A          & US 4407974 A<br>& DE 2834589 A1          & AU 4902479 A<br>& AU 528587 B | 1-6 |
| A | JP 2002-528597 A  (Exxonmobil Research and<br>Engineering Co.),<br>03 September 2002 (03.09.2002),<br>fig. 3<br>& US 5989411 A          & US 5989411 A<br>& EP 1149142 A          & WO 2000/024847 A1<br>& AU 1214000 A          & NO 20011937 A<br>& CA 2346226 A          & AU 767041 B | 1-6 |
| A | JP 62-190307 A  (Toyo Engineering Corp.),<br>20 August 1987 (20.08.1987),<br>entire text; all drawings<br>(Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011171812 A
- JP H353521 B
- JP H6257703 B